Europäisches Patentamt

European Patent Office

Office européen des brevets

(11) Veröffentlichungsnummer: **0 321 049**
**A2**

(12) # EUROPÄISCHE PATENTANMELDUNG

(21) Anmeldenummer: **88202861.6**

(22) Anmeldetag: **13.12.88**

(51) Int. Cl.4: **H04M 19/08**

(30) Priorität: **17.12.87 DE 3742749**

(43) Veröffentlichungstag der Anmeldung:
**21.06.89 Patentblatt 89/25**

(84) Benannte Vertragsstaaten:
**DE FR GB IT**

(71) Anmelder: **Philips Patentverwaltung GmbH**
**Wendenstrasse 35 Postfach 10 51 49**
**D-2000 Hamburg 1(DE)**

(84) **DE**

Anmelder: **N.V. Philips' Gloeilampenfabrieken**
**Groenewoudseweg 1**
**NL-5621 BA Eindhoven(NL)**

(84) **FR GB IT**

(72) Erfinder: **Drude, Stefan, Dipl.-Ing.**
**Graf-Ernst-Weg 12**
**D-2000 Hamburg 61(DE)**

(74) Vertreter: **Peuckert, Hermann, Dipl.-Ing. et al**
**Philips Patentverwaltung GmbH**
**Wendenstrasse 35 Postfach 10 51 49**
**D-2000 Hamburg 1(DE)**

(54) **Fernmeldeendgerät mit einem Signalprozessor.**

(57) Die Erfindung betrifft ein Fernmeldeendgerät mit einem Signalprozessor sowie mit einem mit Gleichspannung gespeisten Stromversorgungsteil zur Erzeugung von Versorgungsspannungen unterschiedlicher Werte.

Der digitale Fernsprechapparat ist so auszugestalten, daß das Stromversorgungsteil möglichst einfach wird und möglichst wenig Raum und Bauteile beansprucht.

Hierzu wird vorgeschlagen, das Stromversorgungsteil als Schaltnetzteil auszubilden und die Steuerung des Schaltnetzteils mittels des Signalprozessors durchzuführen.

Fig.

## Fernmeldeendgerät mit einem Signalprozessor

Die Erfindung betrifft ein Fernmeldeendgerät mit einem Signalprozessor sowie mit einem mit Gleichspannung gespeisten Stromversorgungsteil zur Erzeugung von Versorgungsspannungen unterschiedlicher Werte.

Ein solches Fernmeldeendgerät ist beispielsweise ein digitaler Fernsprechapparat, wie er für das zukünftige ISDN-Netz benötigt wird. Ein solches Gerät wird aus einer 40 V-Eingangsspannungsquelle versorgt. Die für den Betrieb der Schaltung erforderlichen Versorgungsspannungen von z.B. +5 V, -5 V, +8 V werden aus dieser Eingangsspannung mittels eines DC/DC-Wandlers erzeugt. An den DC/DC-Wandler werden hohe Anforderungen gestellt, insbesondere muß er einen sehr guten Wirkungsgrad aufweisen. Die Steuerung und Regelung des DC/DC-Wandlers erfolgt über zugehörige Steuer- und Regelschaltungen. Insgesamt ergibt sich hierdurch bereits für das Stromversorgungsteil ein schaltungsmäßig komplexer Aufbau mit einer Vielzahl von Bauteilen. Im übrigen weist der digitale Fernsprechapparat auch einen Signalprozessor auf, der beispielsweise eine Spracherkennung und eine Sprachsynthese ermöglicht und somit die Bedienung des digitalen Fernsprechapparates durch gesprochene Worte gestattet. Eine andere mittels des Signalprozessors zu bewältigende Aufgabe ist beispielsweise die Echokompensation beim Freisprechen.

Der Erfindung liegt die Aufgabe zugrunde, einen digitalen Fernsprechapparat der eingangs angegebenen Art so auszugestalten, daß das Stromversorgungsteil möglichst einfach wird und möglichst wenig Raum und Bauteile beansprucht. Diese Aufgabe wird gemäß der Erfindung dadurch gelöst, daß das Stromversorgungsteil ein Schaltnetzteil ist und die Steuerung des Schaltnetzteils mittels des Signalprozessors durchgeführt wird. Dabei ist es von Vorteil, wenn dem Signalprozessor als Ist-Wert ein zu einer Ausgangsspannung des Stromversorgungsteil korrelierter Spannungswert zugeführt und der Soll-Wert als digitaler Wert im Signalprozessor speicherbar ist.

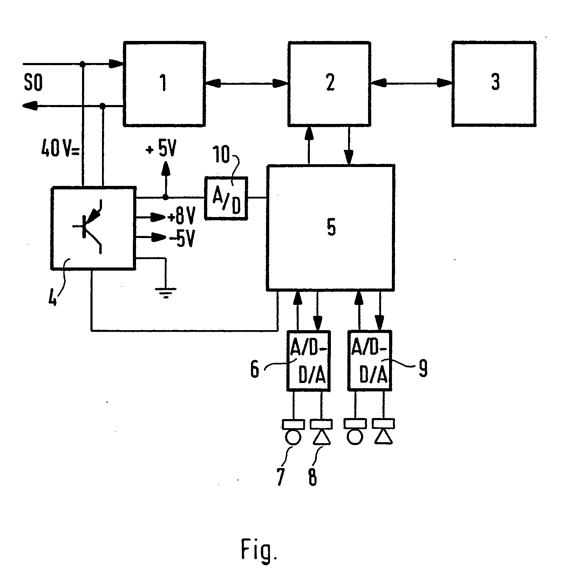

Anhand eines in der Figur dargestellten Ausführungsbeispiels soll die Erfindung nachfolgend beschrieben werden.

Die Figur zeigt in schematischer Darstellung eine Schaltungsanordnung in einem digitalen Fernsprechapparat mit einem Signalprozessor. Über die Schnittstelle SO ist der digitale Fernsprechapparat an das Netz angeschlossen, über diese Schnittstelle erfolgt auch die Stromversorgung mit 40 V Gleichspannung. Die nachrichtentechnische Information, die sich aus Signalisierungs- und Synchronisierungsinformation und der eigentlichen Nutzinformation zusammensetzt, wird in den Bauteilen 1 und 2 vorverarbeitet. Die Bauteile 1 und 2 sind ein sogenannter Schicht 1-Baustein und ein sogenannter Schicht 2-Baustein. Diese Bezeichnungen beziehen sich auf das OSI-Schichtmodell der ISO, welches der Definition von ISDN zugrundegelegt wurde. An der Schnittstelle SO am Eingang des Bauteils 1 liegen die nach einem Zeitmultiplexverfahren verschachtelten Kanäle B1, B2 und D an. Im Bauteil 1 erfolgt die Demultiplexierung. Außerdem übernimmt das Bauteil 1 die Abwicklung des Protokolls für die Schnittstelle SO. Die einzelnen Kanäle B1, B2 und D werden dem auf das Bauteil 1 folgenden Bauteil 2 übergeben. Dieses leitet die Kanäle B1 und B2 dem Signalprozessor 5 zu und wertet die Informationen aus, die im D-Kanal übertragen werden. Treffen für den digitalen Fernsprechapparat bestimmte Informationen ein, so werden diese an den Steuerrechner 3 weitergeleitet, der die weitere Verarbeitung übernimmt.

Dieser Steuerrechner 3 übernimmt noch weitere im digitalen Fernsprechapparat anfallende Steuerungs- und Überwachungsaufgaben wie z.B. Auswertung eines Gabelschalters, Steuerung einer Anzeigevorrichtung usw. Seine Hauptaufgabe ist die Abarbeitung des D-Kanal-Protokolls und dabei vor allem die Bearbeitung der dritten bis siebten Schicht, soweit diese nicht schon im Bauteil 2 erfolgt.

Der Signalprozessor 5 ist für die Verarbeitung der Sprache eingesetzt und dient beispielsweise dazu, bei einer an seinen Eingängen angeschlossenen Freisprecheinrichtung 6 mit Mikrophon 7 und Lautsprecher 8 eine akustische Rückkopplung zu verhindern. Ebenso kann der Signalprozessor die Bearbeitung der Signale des Mikrophons bzw. für die Hörkapsel des am digitalen Fernsprechapparat angeschlossenen Handapparats 9 durchführen.

Ein Signalprozessor kann als spezieller Mikroprozessor aufgefaßt werden, der aufgrund seiner besonderen inneren Struktur auch komplizierte Rechenoperationen mit hoher Geschwindigkeit auszuführen in der Lage ist.

Die ebenfalls über die Schnittstelle SO zugeführte Versorgungsgleichspannung wird dem Stromversorgungsteil 4 zugeführt, welches die für den Betrieb der Schaltung erforderlichen Spannungen erzeugt, in diesem Ausführungsbeispiel die Spannungen -5 V, +5 V, +8 V. Hierzu ist das Stromversorgungsteil als Schaltnetzteil ausgebildet und enthält nur die für die Schaltfunktionen und für eine eventuell erforderliche Transformierung sowie nachfolgende Gleichrichtung und Siebung erforderlichen Bauteile. Die Steuerung wird durch den Signalprozessor 5 bewirkt, der zu diesem Zweck an einem Eingang den mittels des Analog-Digital-Wandlers 10 erzeugten Digitalwert der Spannung + 5, V zugeführt erhält und diesen als Ist-Wert mit einem digital vorgegebenen und in den Signalprozessor auf einfache Weise einprogrammierbaren Sollwert vergleicht. Die Digitalisierung des Spannungs-Ist-Wertes kann bei geeigneter Anführung des Signalprozessors in diesem selbst erfolgen. Aus dem Vergleich zwischen Istwert und Sollwert leitet der Signalprozessor eine Steuergröße ab, die unmittelbar in Schaltbefehle umgesetzt an das Stromversorgungsteil gelegt ist. Es hat sich im praktischen Betrieb erwiesen, daß die Überwachung und Regelung nur eines Spannungswertes von mehreren bei einem Schaltnetzteil ausreichend ist, weil durch die exakte Regelung eines Ausgangswertes die übrigen Werte ebenfalls in der richtigen Richtung beeinflußt werden. Besondere Steuer- und Regeleinrichtungen für das Schaltnetzteil und damit verbundener schaltungstechnischer Aufwand sind völlig entbehrlich. Eine in üblicher Weise vorgesehene Notstromversorgung z.B. durch eine gepufferte Batterie stellt die Funktion des Signalprozessors auch beim Ein- und Ausschalten des Gerätes sicher.

## Ansprüche

1. Fernmeldeendgerät mit einem Signalprozessor sowie mit einem mit Gleichspannung gespeisten Stromversorgungsteil zur Erzeugung von Versorgungsspannungen unterschiedlicher Werte, dadurch gekennzeichnet, daß das Stromversorgungsteil ein Schaltnetzteil (4) ist und die Steuerung des Schaltnetzteils (4) mittels des Signalprozessors (5) durchgeführt wird.

2. Fernmeldeendgerät nach Anspruch 1, dadurch gekennzeichnet, daß dem Signalprozessor (5) als Ist-Wert ein mit einer Ausgangsspannung des Stromversorgungsteils (4) korrelierter Spannungswert zugeführt und der Sollwert als digitaler Wert im Signalprozessor (5) speicherbar ist.

3. Fernmeldeendgerät nach Anspruch 2, dadurch gekennzeichnet, daß zwischen dem Ist-Wert-Ausgang des Stromversorgungsteils (4) und dem Eingang des Signalprozessors ein Analog/Digital-Wandler (10) eingeschaltet ist.

Fig.

PHD 87-278